# FASCICULE DE BREVET EUROPEEN

(11) **EP 1 742 344 B1**
(45) Date de publication et mention de la délivrance du brevet: **03.03.2010**
(21) Numéro de dépôt: 06116637.7
(22) Date de dépôt: 05.07.2006
(51) Int. Cl.: H02N 2/06, H01L 41/04, G02B 7/10

(54) **Commande d'un moteur piézoélectrique**
Steuerung für einen piezoelektrischen Motor
Control of a piezoelectric motor

(30) Priorité: 05.07.2005 FR 0552039
(43) Date de publication de la demande: 10.01.2007
(73) Titulaire: STMICROELECTRONICS SA, 92120 Montrouge (FR)
(72) Inventeur: Guedon, Yannick, 808001 Singapore (SG); Giovannini, Michael, 38000 Grenoble (FR); Ianigro, Corinne, 38000 Grenoble (FR)
(74) Mandataire: de Beaumont, Michel

(56) Documents cités:
- WO-A-01/33646
- WO-A-02/15379
- WO-A-02/15380
- US-A- 5 268 621
- US-A1- 2002 180 387

## Description

### Domaine de l'invention

La présente invention concerne la commande de moteurs piézoélectriques.

### Exposé de l'art antérieur

Les moteurs piézoélectriques tels que des moteurs du type piezolegs commercialisés par la société Piezomotor sont largement utilisés pour assurer des petits déplacements d'éléments de faibles dimensions. Ainsi, de tels moteurs sont utilisés, par exemple, pour assurer la fonction d'agrandissement/réduction (zoom) d'un objectif d'un dispositif de faibles dimensions de prise de vues fixes ou animées. De tels dispositifs sont notamment incorporés dans des dispositifs portables alimentés par batterie assurant une fonction principale autre que la prise de vues tels que des téléphones ou des organiseurs personnels.

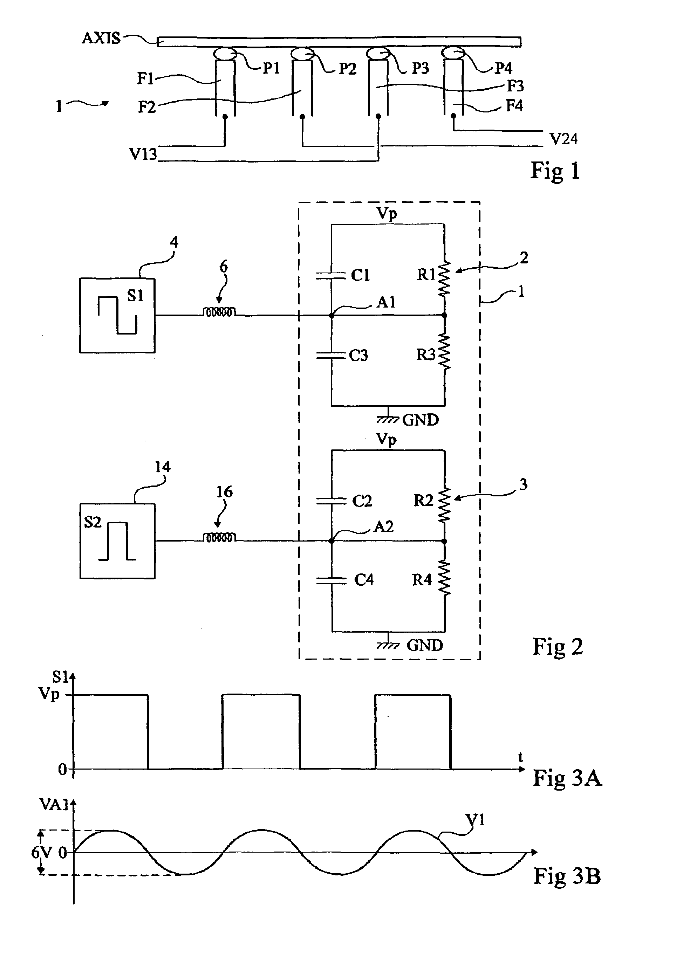

La figure 1 illustre schématiquement et partiellement le principe de fonctionnement d'un tel moteur 1. Un axe AXIS à déplacer dans une direction horizontale repose sur quatre coussinets P1, P2, P3 et P4. Chaque coussinet Pi, où i est égal à 1, 2, 3 ou 4, est solidaire d'un pied piézoélectrique Fi. Les pieds sont agencés en deux paires intercalées F1, F3 et F2, F4. La paire F1-F3 est commandée par un signal de tension V13. La paire F2-F4 est commandée par un signal de tension V24. Les signaux V13 et V24 sont classiquement des signaux sinusoïdaux d'une amplitude de 6 V et d'une fréquence de l'ordre de 80 à 100 kHz. Les signaux V13 et V24 ont typiquement de mêmes formes sinusoïdales, fréquences et amplitudes mais sont déphasés, en quadrature de phase.

Un procédé connu pour commander un tel moteur consiste à générer des signaux sinusoïdaux à l'aide d'un amplificateur connecté directement à l'entrée du moteur. Un tel procédé consomme un courant trop élevé pour les applications mobiles visées.

Plutôt que de produire des signaux sinusoïdaux directement fournis au moteur, on a proposé de les obtenir en filtrant un signal numérique au moyen d'un filtre résonant LC dont les éléments capacitifs sont constitués du moteur lui-même.

Un tel procédé est décrit ci-après en relation avec les figures 2, 3A et 3B.

La figure 2 illustre schématiquement et partiellement un schéma électrique dynamique équivalent du moteur piézoélectrique 1 de la figure 1 associé à un circuit de commande connu. Les paires F1, F3 et F2, F4 sont modélisées par deux connexions en parallèle distinctes 2 et 3, entre des mêmes rails d'alimentation haut Vp et bas GND, d'une association en série de deux condensateurs respectifs C1, C3 et C2, C4 et d'une association en série de deux résistances R1, R3 et R2, R4, respectivement. Les condensateurs C1, C2, C3 et C4 représentent les capacités équivalentes du moteur 1 alors que les résistances R1, R2, R3 et R4 modélisent des pertes. Chaque connexion 2, 3 est associée à un générateur d'impulsions (une machine d'état numérique) respectivement 4 (signal S1) ou 14 (signal S2).

Le générateur 4 produit un signal périodique en créneau S1 illustré en figure 3A. Le rapport cyclique du créneau S1 de la figure 3A est égal à 1/2, c'est-à-dire que le signal S1 est à un niveau haut pendant une même durée (demi-période) qu'à un niveau bas. La sortie du générateur 4 est connectée à une première borne d'un élément inductif, par exemple une bobine 6, dont une seconde borne est reliée à un point milieu A1 commun des associations en série C1-C3 et R1-R3 de la connexion 2. Ce point milieu A1 correspond à des bornes des pieds F1 et F3. Il en résulte que le signal S1 est filtré par le filtre LC constitué de l'élément 6 et des capacités équivalentes C1 et C3. Le filtrage est effectué de façon à obtenir, au point A1, un signal de tension de commande sinusoïdal parfait VA1 illustré en figure 3B d'une amplitude de 6 V.

De même, un élément inductif, par exemple une bobine 16, est interposée entre le générateur 14 et un point milieu A2 commun des associations en série C2-C4 et R2-R4 de la connexion 3. Le point milieu A2 correspond à des bornes des pieds F2 et F4. Le signal numérique S2 produit par le générateur 14 est de même rapport cyclique que le signal S1 mais déphasé par rapport à celui-ci de façon à fournir, à la paire F2, F4, un signal de tension de commande sinusoïdal VA2 au point A2, similaire au signal VA1 mais en quadrature de phase par rapport à ce dernier.

Pour obtenir des signaux de commande VA1 et VA2 sinusoïdaux d'une fréquence nominale donnée comprise entre 80 et 100 kHz, on utilise des filtres LC résonant à la fréquence nominale. Les capacités équivalentes C1, C2, C3 et C4 du moteur 1 étant très faibles, de l'ordre de 50 nF, cela conduit à utiliser des éléments 6 et 16 ayant une inductance très élevée, de l'ordre de 30 µH.

Un inconvénient d'un tel procédé réside dans le fait que de tels éléments 6 et 16 sont très encombrants, ce qui est particulièrement gênant dans des applications visées de module optique intégré dans des dispositifs portables alimentés par batterie.

WO 02/15380 décrit un actionneur électromécanique et un dispositif de commande de celui-ci qui comporte deux commutateurs connectés en série entre des bornes d'alimentation et une unité de commande qui commande les commutateurs séparément afin de charger/décharger des éléments de commande. La consommation du circuit de commande est élevée.

US 5 268 621 décrit des circuits de commande pour permettre un déplacement d'un objet de façon très précise, qui comporte des composants piézoélectriques. Les circuits de commande comportent une partie numérique et une partie analogique et sont encombrants.

Un objet de la présente invention est de proposer un procédé de commande d'un moteur piézoélectrique qui pallie tout ou partie des inconvénients des procédés connus.

Un autre objet de la présente invention est de proposer un tel procédé qui utilise un circuit peu encombrant à intégrer.

Un autre objet de la présente invention est de proposer un tel procédé qui utilise un circuit dont la consommation de puissance soit réduite.

### Résumé de l'invention

Pour atteindre tout ou partie de ces objets et d'autres, la présente invention prévoit un procédé de commande d'un moteur piézoélectrique, tel que des signaux de commande du moteur sont des signaux de tension périodiques non sinusoïdaux, que chaque signal de commande est obtenu en appliquant à un élément inductif, constituant avec des capacités équivalentes un filtre LC non résonant, un signal périodique produit par une machine d'état numérique et tel que chaque période du signal périodique numérique est constituée de sous-signaux de même nombre de bits, chaque bit étant susceptible de prendre un état choisi parmi des première et seconde valeurs.

Selon un mode de réalisation de l'invention, chaque période d'un signal produit par la machine d'état comporte au moins:
- une première série de sous-signaux dans lesquels une quantité choisie de bits les plus significatifs de la première valeur du sous-signal devient de la seconde valeur ;
- un nombre entier donné de répétitions d'un premier signal à un seul bit constitué du bit de la seconde valeur ;
- une seconde série de sous-signaux, inverse de la première série dans lesquels une même quantité choisie de bits les moins significatifs ayant la seconde valeur du sous-signal précédent devient de la première valeur ; et
- le nombre donné de répétitions d'un signal à un seul bit constitué du bit de la première valeur.

Selon un mode de réalisation de l'invention, la fréquence d'échantillonnage des sous-signaux est de 2 MHz, le nombre de bits étant de dix, et :
- la quantité choisie est égale à un ;
- le nombre de répétitions est compris entre 0 et 25 ;
- le premier sous-signal de la première série comporte uniquement des bits de la première valeur ;
- le dernier sous-signal de la première série comporte uniquement des bits de la seconde valeur ;
- le premier sous-signal de la seconde série comporte uniquement des bits de la seconde valeur ; et
- le dernier sous-signal de la seconde série comporte uniquement des bits de la première valeur.

Selon un mode de réalisation de l'invention, la fréquence d'échantillonnage des sous-signaux est de 2 MHz, le nombre de bits étant de dix, et :
- la quantité choisie est supérieure à un ;
- le premier sous-signal de la première série comporte au moins un bit le plus significatif de la seconde valeur ;
- le dernier sous-signal de la première série comporte au moins un bit le moins significatif de la première valeur et est répété jusqu'à atteindre la demi-période minimale correspondant à une valeur de fréquence maximale recherchée ;
- le premier sous-signal de la seconde série comporte au moins un bit le moins significatif de la première valeur ; et
- le dernier sous-signal de la seconde série comporte au moins un bit le plus significatif de la seconde valeur et est répété jusqu'à atteindre la fin d'une période minimale correspondant à une valeur de fréquence maximale recherchée.

La présente invention prévoit également un moteur piézoélectrique commandé par un circuit de commande propre à mettre en oeuvre un procédé selon l'un quelconque des modes de réalisation précédents de façon à fournir deux signaux de tension déphasés de commande du moteur.

La présente invention prévoit également un objectif photographique, caractérisé en ce qu'il comporte des moyens propres à coopérer avec un moteur selon le mode de réalisation précédent.

La présente invention prévoit également un appareil photographique comportant un objectif selon le mode de réalisation précédent.

La présente invention prévoit également un appareil téléphonique comprenant un appareil photographique selon le mode de réalisation précédent.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 qui a été décrite précédemment est un schéma partiel d'un moteur piézoélectrique ;
la figure 2 qui a été décrite précédemment est un schéma électrique équivalent partiel du moteur de la figure 1 et de son circuit de commande classique ;
les figures 3A et 3B qui ont été décrites précédemment sont des chronogrammes illustrant schématiquement et partiellement la commande classique du moteur de la figure 2 ;
la figure 4 est un schéma électrique partiel d'un moteur piézoélectrique et de son circuit de commande selon un mode de réalisation de la présente invention ;
la figure 5A est un chronogramme schématique et partiel illustrant un signal numérique produit par une machine d'état du circuit de la figure 4 selon un mode de réalisation de la présente invention ;
la figure 5B est un chronogramme schématique et partiel illustrant un signal de commande d'un moteur piézoélectrique obtenu à partir du signal numérique de la figure 5A ;
la figure 6A est un chronogramme schématique et partiel illustrant un signal numérique produit par une machine d'état du circuit de la figure 4 selon un autre mode de réalisation de la présente invention ; et
la figure 6B est un chronogramme schématique et partiel illustrant un signal de commande d'un moteur piézoélectrique obtenu à partir du signal numérique de la figure 6A.

### Description détaillée

Par souci de clarté, les mêmes éléments ont été désignés par les mêmes références aux différentes figures et, de plus, comme cela est habituel, les chronogrammes des figures 3A, 3B, 5A, 5B et 6A et 6B ne sont pas tracés à l'échelle.

Une caractéristique d'un mode de réalisation de la présente invention est de commander un moteur piézoélectrique par un signal de tension périodique non sinusoïdal.

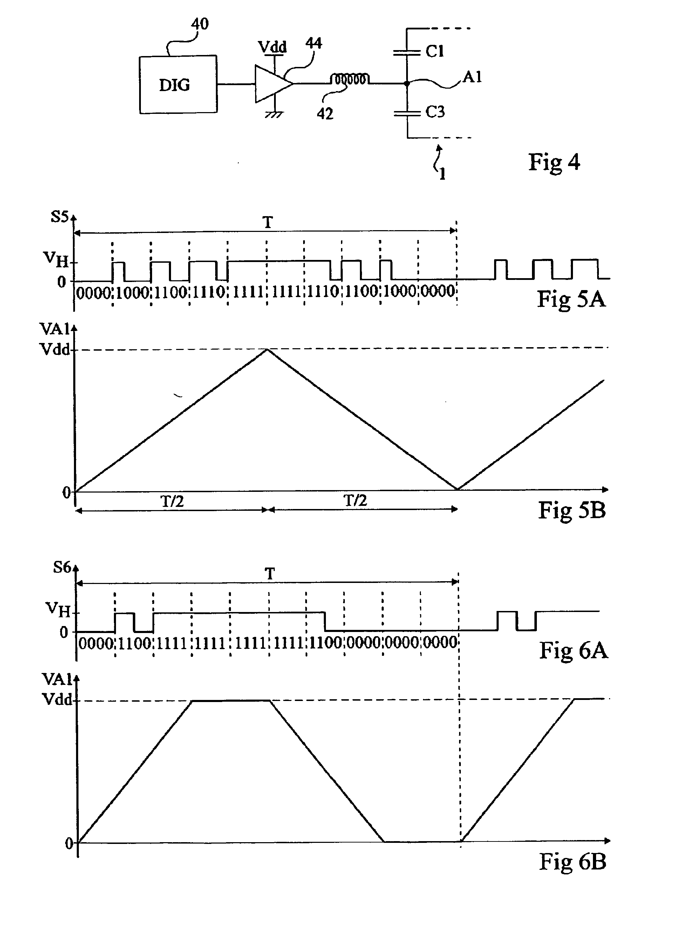

La figure 4 représente partiellement et de façon très schématique un mode de réalisation de la présente invention.

Pour simplifier, seul le circuit de commande associé à la connexion 2 (figure 2), correspondant à la paire F1, F3 de pieds du moteur 1 (figure 1) sera décrit. De plus, le schéma électrique équivalent de la connexion du moteur, similaire à celui de la figure 2, n'est représenté que partiellement.

Une machine d'état numérique (DIG) 40 fournit un signal numérique envoyé à une première borne d'un élément inductif 42, par exemple une bobine. La seconde borne de l'élément 42 est connectée au point milieu A1. De préférence, un amplificateur de classe D 44 est intercalé entre la machine 40 et l'élément 42 pour élever le niveau de tension du signal numérique, par exemple d'un niveau standard de 3 V à un niveau de 6 V.

Selon une caractéristique de la présente invention, l'inductance de l'élément inductif 42 est de faible valeur par rapport à celle conduisant à un filtre LC résonant à la fréquence du signal reçu. Le filtre LC constitué par l'association de l'élément 42 et des capacités C1 et C3 du moteur 1 présente selon l'invention une fréquence de résonance différente de la fréquence du signal numérique reçu. Par exemple, pour un signal numérique d'une fréquence comprise entre 80 et 100 kHz, en considérant que les valeurs sensiblement égales des capacités équivalentes C1, C2, C3, C4 sont de l'ordre de 50 à 75 nF, l'inductance de l'élément 42 sera comprise entre 2 et 3 µH, par exemple de 2,2 µH.

Le signal numérique sortant de la machine 40 est filtré par le filtre LC désormais non résonant 42-C1, C3 pour fournir au point A1 le signal de tension de commande du moteur.

De façon similaire, le circuit de commande (non représenté) associé à la paire F2, F4 de la figure 1 - connexion 3, figure 2 - comporte une machine d'état numérique, une bobine et un amplificateur de classe D agencés d'une même manière que les éléments du circuit de commande de la connexion 2. Toutefois, le signal numérique est modifié de façon à obtenir au point A2 un signal de commande de tension V24 déphasé par rapport au signal fourni VA1 obtenu au point A1 avec le circuit de la figure 4.

Les figures 5A, 5B, 6A et 6B illustrent schématiquement et partiellement divers signaux selon différents modes de réalisation de la présente invention prélevés en divers points du circuit de la figure 4.

Par souci de clarté, seul le signal numérique, figures 5A et 6A, fourni par la machine 40 pour obtenir un signal VA1, figures 5B et 6B, au point A1 est décrit ci-après. L'homme de l'art saura, à partir des descriptions de tels signaux obtenir le même signal VA2 pour les pieds F2 et F4 du moteur 1, mais déphasé par rapport au signal VA1.

La figure 5A représente un chronogramme d'un train d'impulsions S5 fourni par le circuit 40 et la figure 5B illustre schématiquement une période T du signal VA1 obtenu au point A1 par filtrage du signal numérique S5 de même période T.

Le signal numérique S5 est subdivisé - échantillonné - en sous-signaux. Chaque sous-signal numérique comporte un certain nombre N d'impulsions ou bits.

Le signal S5 est décrit ci-après dans le cas d'un échantillonnage à dix bits, mais représenté par souci de simplification avec un échantillonnage à quatre bits seulement.

Une première demi-période (T/2) du signal S5 commence par un unique sous-signal initial constitué uniquement de bits "0". Ensuite, le bit le plus significatif égal à "0" est remplacé par un bit "1". Un tel remplacement est effectué par pas de un jusqu'à atteindre un premier sous-signal central constitué uniquement de bits "1".

Dans le cas d'un échantillonnage à dix bits, la première demi-période du signal numérique S5 est constituée de la séquence : 0000000000 ; 1000000000 ; 1100000000 ; 1110000000 ; 1111000000 ; 1111100000 ; 1111110000 ; 1111111000 ; 1111111100 ; 1111111110 ; et 1111111111.

Dans l'exemple représenté d'un échantillonnage à quatre bits, le signal S5 commence donc par une séquence : 0000 ; 1000 ; 1100 ; 1110 ; 1111.

Comme l'illustre la figure 5B, une telle première demi-période du signal S5 conduit, après filtrage LC non résonant 42-C1, C3, à une première demi-période croissante du signal de commande VA1 d'une valeur minimale à une valeur maximale Vdd. L'écart entre les valeurs minimale et maximale est de six volts. Par exemple, la valeur minimale est nulle alors que la valeur maximale est égale à 6 V.

Ensuite, pendant la demi-période suivante, le signal numérique S5 répète une fois le sous-signal central ne comportant que des "1" et retourne à un sous-signal final ne comportant que des "0" en remplaçant, par pas de un, le bit le moins significatif "1" par un bit "0".

Dans le cas d'un échantillonnage à dix bits, le signal S5 s'achève par une séquence : 1111111111 ; 1111111110 ; 1111111100 ; 1111111000 ; 1111110000 ; 1111100000 ; 1111000000 ; 1110000000 ; 1100000000 ; 1000000000 ; 0000000000.

Dans l'exemple représenté en figure 5A d'un échantillonnage à quatre bits, le signal S5 s'achève donc par une séquence : 1111 ; 1110 ; 1100 ; 1000 ; 0000.

Une telle seconde demi-période du signal S5 correspond à une demi-période décroissante du signal de commande VA1 illustré en figure 5B.

Le signal VA1 est, comme l'illustre la figure 5B, un signal triangulaire de période T.

Les inventeurs ont constaté que, de façon inattendue, le fonctionnement du moteur 1 n'est pas affecté par le remplacement du signal de tension de commande sinusoïdal classique de la figure 3B par le signal triangulaire de la figure 5B.

De plus, l'élément inductif 42 ayant une valeur relativement faible, de l'ordre de 2,2 µH, est avantageusement insérable dans un module optique contrairement à l'élément correspondant 6 d'une valeur de 30 µH utilisé dans le mode de réalisation de la figure 2.

Un autre avantage d'un tel procédé réside dans sa consommation de puissance réduite. Ainsi, alors que la production d'un signal sinusoïdal par le circuit de la figure 2 provoquait une consommation de l'ordre de 500 mW, la consommation du circuit de commande selon la présente demande est réduite à environ 50 mW.

Pour accroître la période des signaux de tension VA1 et VA2, donc réduire leur fréquence, à partir du signal triangulaire de période minimale - fréquence maximale, par exemple de 100 kHz - de la figure 5B, on remplace les pics aux valeurs extrêmes minimale (0) et maximale (Vdd) par des états stables à de telles valeurs. Pour un signal VA1 donné, la durée de stabilisation à la valeur minimale est égale à la durée de stabilisation à la valeur maximale.

Par rapport au signal numérique de la figure 5A, le signal numérique permettant d'obtenir un tel signal de commande comporte un même nombre M de répétitions, à la fin de la première séquence, d'un signal à un seul bit constitué du bit "1" et, à la fin de la deuxième séquence, d'un signal à un seul bit constitué exclusivement du bit "0".

En supposant que l'échantillonnage du signal numérique S5 est de 2 MHz et que le nombre N de bits est de 10, pour faire varier la fréquence du signal de commande VA1 entre 80 et 100 kHz, le nombre M de répétitions des signaux à un seul bit est compris entre 1 et 25.

Le fonctionnement du moteur piézoélectrique 1 n'est pas affecté par l'utilisation en tant que signaux de commande de tels signaux.

Dans les modes de réalisation précédents, on a considéré que les séquences croissante et décroissante du signal numérique sont obtenues en remplaçant un unique bit par sa valeur complémentaire.

Selon un autre mode de réalisation de la présente invention, on utilise pour commander le moteur piézoélectrique des signaux présentant des séquences croissante et décroissante plus rapides.

Un tel mode de réalisation est décrit ci-après en relation avec les chronogrammes des figures 6A et 6B.

La figure 6A représente un chronogramme d'un train d'impulsions S6 fourni par le circuit 40 et la figure 6B illustre schématiquement une période T du signal VA1 correspondant obtenu au point A1 par filtrage du signal numérique S6 de même période T.

Le signal S6 est décrit ci-après dans le cas d'un échantillonnage à dix bits, mais représenté par souci de simplification avec un échantillonnage à quatre bits seulement.

La période des signaux des figures 6A, 6B est la même que celle des signaux des figures 5A, 5B. Par souci de simplification, seules les différences entre les figures 5A et 6A, 5B et 6B sont décrites ci-après.

Le signal S6 comporte une première séquence partant d'un signal initial puis on remplace par pas de un, un nombre P donné de bits "0" les plus significatifs par des bits "1" jusqu'à atteindre un état dans lequel moins de P bits les moins significatifs sont égaux à "0", où P est supérieur à 1.

Par exemple, pour P=2, dans le cas d'un échantillonnage à quatre bits illustré en figure 6A, le signal S6 comporte la première séquence : 0000, 1100, 1111. Le signal S6 comporte donc une séquence croissante à trois sous-signaux au lieu de cinq dans le signal S5 de la figure 5A.

Dans le cas d'un échantillonnage à dix bits, la séquence croissante du signal numérique S6 comportera moins de sous-signaux que le signal S5 homologue. En pratique, les études des inventeurs ont montré que dans ce cas il vaut mieux partir du sous-signal 1000000000. La séquence croissante du signal S6 pour P=2 est donc : 1000000000 ; 1110000000 ; 1111100000 ; 1111111000 ; 111111110, soit cinq sous-signaux au lieu de onze pour la séquence du signal S5 correspondant.

Pour obtenir une même fréquence maximale, période minimale, le reste de la séquence croissante du signal S5 est remplacé dans le signal S6 par une répétition du dernier sous-signal de la séquence croissante.

Ainsi, en reprenant l'exemple où P=2, dans le cas illustré d'un échantillonnage à quatre bits, le signal 1111 est répété deux fois. Dans le cas d'un échantillonnage à dix bits, avec un sous-échantillonnage à 2 MHz, pour une fréquence maximale de 100 kHz, le signal 1111111110 est répété six fois.

Comme l'illustre la comparaison des figures 5B et 6B, on obtient alors en figure 6B un signal VA1 présentant une phase de croissance plus rapide entre une valeur minimale, par exemple nulle, et une valeur maximale Vdd, par exemple égale à 6 V, suivie d'une phase de stabilisation à la valeur maximale Vdd qui se maintient jusqu'à la demi-période.

Ensuite, le signal S6 comporte des sous-signaux dans lesquels les P bits les moins significatifs égaux à "1" sont remplacés par des bits nuls jusqu'à un sous-signal comportant moins de P bits égaux à "1".

Dans le cas où P=2, pour un échantillonnage à quatre bits, la séquence est alors : 1111, 1100, 0000. Par rapport au signal S5 de la figure 5A, le reste de la demi-période est complété par la répétition deux fois du dernier sous-signal 0000.

Dans le cas d'un échantillonnage à dix bits sous-échantillonné à 2 MHz, pour obtenir une fréquence maximale de 100 kHz, la séquence est : 1111111110 ; 1111111000 ; 1111100000 ; 1110000000 ; 1000000000 ; puis une répétition de six fois le sous-signal 1000000000.

Comme pour le signal de la figure 5A, pour accroître la période et donc réduire la fréquence du signal de commande VA1 à rampes croissante et décroissante rapides, pour permettre une variation de fréquence dans la plage allant de 80 à 100 kHz, on introduit une répétition de 1 à 25 fois de signaux constitués d'un seul bit "0" ou "1" de façon similaire à ce qui a été décrit précédemment.

Le fonctionnement du moteur piézoélectrique n'est pas affecté par l'utilisation en tant que signaux de commande d'un signal VA1 de la figure 6A et d'un signal VA2 similaire mais déphasé.

Plus généralement, le signal de base de fréquence la plus élevée est obtenu à partir d'un signal numérique comportant des sous-signaux sous-échantillonnés à N bits comportant :
- une première séquence de sous-signaux successifs dans lesquels les P bits les plus significatifs égaux à "0" sont remplacés par des bits "1", où P est un entier non nul inférieur à N ;
- une répétition du dernier sous-signal de la séquence précédente, de façon à atteindre la fin de la première demi-période ;
- une seconde séquence de sous-signaux successifs, inverse de la première, dans lesquels les P bits les moins significatifs égaux à "1" sont remplacés par des bits "0" ; et
- une répétition du dernier sous-signal de la séquence précédente, de façon à atteindre la période.

La période du signal est ensuite accrue, c'est-à-dire la fréquence diminuée, en répétant un même nombre de fois :
- un signal à un seul bit constitué exclusivement du bit "1" avant la seconde séquence ; et
- un signal à un seul bit constitué exclusivement du bit "0" après la répétition du dernier sous-signal qui suit la seconde séquence.

Bien entendu, la présente invention est susceptible de diverses variantes et modifications qui apparaîtront à l'homme de l'art. En particulier, la présente invention a été décrite en figure 4 avec une machine d'état numérique propre à produire un quelconque des signaux numériques décrits précédemment. Toutefois, l'homme de l'art comprendra que en fonction de l'application considérée, la machine d'état pourra être conçue pour produire plusieurs de ces signaux.

De plus, l'homme de l'art saura choisir le signal de commande du moteur en fonction de la forme de variation de la force développée par le moteur recherchée.

L'homme de l'art saura également adapter les signaux de commande et les signaux numériques à l'application, en particulier à la plage de fréquences recherchée. Ainsi, l'homme de l'art saura adapter le nombre de bits et le nombre de sous-signaux des différents signaux numériques à une plage de fréquences visée.

## Revendications

1. Procédé de commande d'un moteur piézoélectrique (1), dans lequel les signaux de commande (VA1, VA2) du moteur sont des signaux de tension périodiques non sinusoïdaux, chaque signal de commande étant obtenu en appliquant un signal périodique (S5, S6) produit par une machine d'état numérique à un élément inductif (42) constituant avec des capacités équivalentes (C1, C3 ; C2, C4) un filtre LC non résonant et chaque période dudit signal périodique numérique étant constituée de sous-signaux de même nombre (N) de bits, chaque bit étant susceptible de prendre un état choisi parmi des première et seconde valeurs.

2. Procédé selon la revendication 1, dans lequel chaque période d'un signal (S5 ; S6) produit par la machine d'état (40) comporte au moins :
- une première série de sous-signaux dans lesquels une quantité choisie (P) de bits les plus significatifs de la première valeur du sous-signal devient de la seconde valeur ;
- un nombre entier donné de répétition d'un signal à un seul bit constitué du bit de la seconde valeur ;
- une seconde série de sous-signaux, inverse de la première série dans lesquels une même quantité choisie de bits les moins significatifs ayant la seconde valeur du sous-signal précédent devient de la première valeur ; et
- ledit nombre entier de répétition d'un signal à un seul bit constitué du bit de la première valeur.

3. Procédé selon la revendication 2, dans lequel la fréquence d'échantillonnage des sous-signaux est de 2 MHz, le nombre de bits étant de dix et dans lequel :
- la quantité choisie est égale à un ;
- le nombre de répétitions est compris entre 0 et 25 ;
- le premier sous-signal de la première série comporte uniquement des bits de la première valeur ;
- le dernier sous-signal de la première série comporte uniquement des bits de la seconde valeur ;
- le premier sous-signal de la seconde série comporte uniquement des bits de la seconde valeur ; et
- le dernier sous-signal de la seconde série comporte uniquement des bits de la première valeur.

4. Procédé selon la revendication 2, dans lequel la fréquence d'échantillonnage des sous-signaux est de 2 MHz, le nombre de bits étant de dix et dans lequel :
- la quantité choisie est supérieure à un ;
- le premier sous-signal de la première série comporte au moins un bit le plus significatif de la seconde valeur ;
- le dernier sous-signal de la première série comporte au moins un bit le moins significatif de la première valeur et est répété jusqu'à atteindre la demi-période minimale correspondant à une valeur de fréquence maximale recherchée ;
- le premier sous-signal de la seconde série comporte au moins un bit le moins significatif de la première valeur ; et
- le dernier sous-signal de la seconde série comporte au moins un bit le plus significatif de la seconde valeur et est répété jusqu'à atteindre la fin d'une période minimale correspondant à une valeur de fréquence maximale recherchée.

5. Moteur piézoélectrique (1), **caractérisé en ce qu'**il est commandé par un circuit de commande (40, 42, 44) propre à mettre en oeuvre un procédé selon l'une quelconque des revendications 1 à 4 de façon à fournir deux signaux de tension déphasés de commande dudit moteur.

6. Objectif photographique, **caractérisé en ce qu'**il comporte des moyens propres à coopérer avec un moteur selon la revendication 5.

7. Appareil photographique, **caractérisé en ce qu'**il comporte un objectif selon la revendication 6.

8. Appareil téléphonique, **caractérisé en ce qu'**il comprend un appareil photographique selon la revendication 7.

## Claims

1. A method for controlling a piezoelectric motor (1), wherein control signals (VA1, VA2) of the motor are periodic non-sinusoidal voltage signals, each control signal being obtained by applying a periodic signal (S5, S6) generated by a digital state machine to an inductive element (42), forming with equivalent capacitors (C1, C3; C2, C4) a non-resonant LC filter, and each period of the digital periodic signal being formed of sub-signals of same number (N) of bits, each bit being capable of taking a state selected from among first and second values.

2. The method of claim 1, wherein each period of a signal (S5; S6) generated by the state machine (40) comprises at least:
- a first series of sub-signals in which a selected quantity (P) of most significant bits of the first value of the sub-signal becomes of the second value;
- a given integral number of repetitions of a first single-bit signal formed of the bit of the second value;
- a second series of sub-signals, inverse to the first series, in which a same selected quantity of least significant bits having the second value of the preceding sub-signal becomes of the first value; and
- the given number of repetitions of a single-bit signal formed of the bit of the first value.

3. The method of claim 2, wherein the sub-signal sampling frequency is 2 MHz, the number of bits being ten, and wherein:
- the selected quantity is equal to one;
- the number of repetitions ranges between 0 and 25;
- the first sub-signal of the first series only comprises bits of the first value;
- the last sub-signal of the first series only comprises bits of the second value;
- the first sub-signal of the second series only comprises bit of the second value; and
- the last sub-signal of the second series only comprises bits of the first value.

4. The method of claim 2, wherein the sub-signal sampling frequency is 2 MHz, the number of bits being ten, and wherein:
- the selected quantity is greater than one;
- the first sub-signal of the first series comprises at least one most significant bit of the second value;
- the last sub-signal of the first series comprises at least one least significant bit of the first value and is repeated to reach the minimum half-period corresponding to a desired maximum frequency value;
- the first sub-signal of the second series comprises at least one least significant bit of the first value; and
- the last sub-signal of the second series comprises at least one most significant bit of the second value and is repeated to reach the end of a minimum period corresponding to a desired maximum frequency value.

5. A piezoelectric motor (1), **characterized in that** it is controlled by a control circuit (40, 42, 44) capable of implementing the method of any of claims 1 to 4 to provide two phase-shifted motor control voltage signals.

6. A photographic lens, **characterized in that** it comprises means capable of cooperating with the motor of claim 5.

7. A photographic device, **characterized in that** it comprises the lens of claim 6.

8. A telephone device, **characterized in that** it comprises the photographic device of claim 7.

## Patentansprüche

1. Verfahren zum Steuern eines piezoelektrischen Motors (1), wobei Steuersignale (VA1, VA2) des Motors periodische, nicht sinusförmige Spannungssignale sind, wobei jedes Steuersignal erhalten wird durch Anlegen eines periodischen Signals (S5, S6), welches durch eine digitale Zustandsmaschine erzeugt wird, an ein induktives Element (42), welches mit äquivalenten Kondensatoren (C1, C3; C2, C4) einen nicht-resonanten LC Filter bildet, und wobei jede Periode des digitalen periodischen Signals aus Untersignalen derselben Zahl (N) von Bits gebildet wird, wobei jedes Bit geeignet ist einen Zustand, ausgewählt aus ersten und zweiten Werten, anzunehmen.

2. Verfahren nach Anspruch 1, wobei jede Periode eines Signals (S5; S6), das durch die Zustandsmaschine (40) erzeugt wurde, wenigstens Folgendes aufweist:
- eine erste Serie von Untersignalen in welcher eine ausgewählte Anzahl (P) höchstwertiger Bits des ersten Wertes des Untersignals den zweiten Wert annimmt;
- eine gegebene ganze Zahl von Wiederholungen eines ersten single-Bit Signals, welches aus dem Bit des zweiten Wertes gebildet ist;
- eine zweite Serie von Untersignalen, invers zur ersten Serie, in welcher dieselbe ausgewählte Anzahl von niedrigstwertigen Bits mit dem zweiten Wert der vorangegangenen Untersignale, den ersten Wert annimmt; und
- die gegebene Zahl von Wiederholungen eines single-Bit Signals, welches aus dem Bit des ersten Wertes gebildet ist.

3. Verfahren nach Anspruch 2, wobei die Untersignal Samplingfrequenz 2 MHz beträgt, die Zahl von Bits zehn ist, und wobei:
- die ausgewählte Anzahl gleich eins ist;
- die Zahl der Wiederholungen sich zwischen 0 und 25 bewegt;
- das erste Untersignal der ersten Serie nur Bits des ersten Wertes aufweist;
- das letzte Untersignal der ersten Serie nur Bits des zweiten Wertes aufweist;
- das erste Untersignal der zweiten Serie nur Bits des zweiten Wertes aufweist; und
- das letzte Untersignal der zweiten Serie nur Bits des ersten Wertes aufweist.

4. Verfahren nach Anspruch 2, wobei die Untersignal Samplingfrequenz 2 MHz beträgt, die Zahl von Bits zehn ist, und wobei:
- die ausgewählte Anzahl größer eins ist;
- das erste Untersignal der ersten Serie wenigstens ein höchstwertiges Bit des zweiten Wertes aufweist;
- das letzte Untersignal der ersten Serie wenigstens ein niedrigstwertiges Bit des ersten Wertes aufweist und wiederholt wird um die minimale Halbperiode entsprechend einem gewünschten maximalen Frequenzwert zu erreichen;
- das erste Untersignal der zweiten Serie wenigstens ein niedrigstwertiges Bit des ersten Wertes aufweist; und
- das letzte Untersignal der zweiten Serie wenigstens ein höchstwertiges Bit des zweiten Wertes aufweist und wiederholt wird um das Ende einer minimalen Periode entsprechend einem gewünschten maximalen Frequenzwert zu erreichen.

5. Piezoelektrischer Motor (1), **dadurch gekennzeichnet, dass** er durch einen Steuerschaltkreis (40, 42, 44) gesteuert wird, welcher geeignet ist das Verfahren nach einem der Ansprüche 1 bis 4 zu implementieren, zum Bereitstellen von zwei phasenverschobenen Motorsteuerungsspannungssignalen.

6. Fotografische Linse, **dadurch gekennzeichnet, dass** sie Mittel aufweist, die mit dem Motor aus Anspruch 5 zusammenwirken.

7. Fotografische Vorrichtung, **dadurch gekennzeichnet, dass** sie die Linse aus Anspruch 6 aufweist.

8. Telefon, **dadurch gekennzeichnet, dass** sie die fotografische Vorrichtung aus Anspruch 7 aufweist.
